# EUROPÄISCHE PATENTSCHRIFT

(11) **EP 1 058 041 B1**
(45) Veröffentlichungstag und Bekanntmachung des Hinweises auf die Patenterteilung: **17.09.2003**
(21) Anmeldenummer: 00250166.6
(22) Anmeldetag: 30.05.2000
(51) Int. Cl.: F16L 25/00, F16L 21/03, E03F 3/04, F16L 21/08, F16L 37/084

(54) **Längskraftschlüssige Rohrverbindung**
Pipe coupling with longitudinal force-fit
Raccord de tuyaux à liaison de force longitudinale

(30) Priorität: 01.06.1999 DE 29909869 U
(43) Veröffentlichungstag der Anmeldung: 06.12.2000
(73) Patentinhaber: Berliner Wasserbetriebe Anstalt des öffentlichen Rechts, 10179 Berlin (DE)
(72) Erfinder: Hackethal, Jan, Dipl.-Ing., 12559 Berlin (DE)

(56) Entgegenhaltungen:
- GB-A- 1 223 071
- US-A- 1 413 008
- US-A- 3 129 961
- US-A- 3 177 019

## Beschreibung

Die Erfindung betrifft eine Rohrverbindung für Stahlbeton / glasfaserverstärkte Kunststoff (GFK) - Verbundvortriebsrohre, die im Druckrohrleitungsbau für begehbare und für nicht begehbare Rohrleitungen eingesetzt werden.

Das Rohrvortriebsverfahren erfordert relativ kurze Rohrkörper, woraus bei längeren Strecken eine Vielzahl von Rohrverbindungen resultiert. Diese Rohrverbindungen müssen nicht nur dicht sein, sondern es dürfen wegen des Vortriebes keine äußeren Vorsprünge vorhanden sein, und auch innen müssen die Rohre wegen des Wasser-oder Abwassertransportes eine glatte Fläche aufweisen.
Aus diesem Grund ist der an sich bewährte Einsatz von Muffenrohren nicht möglich. Um dennoch die gute Verbindungstechnik eines Muffenrohres zu nutzen, ist es nach der DE 41 32 251 bekannt, ein Gußrohr mit nach innen ausgeformter Muffe und einer Zementauskleidung einzusetzen, um innen wieder einen zylindrischen Körper herzustellen. Die Herstellung der Längskraftschlüssigkeit ist jedoch mit dieser Art von Rohrverbindung nicht möglich.

Es sind (DE 38 37 161) für diesen Zweck Vortriebsrohre bekannt, die aus duktilem Gußeisen bestehen, die stimseitig, wechselweise am Innen- und Außenumfang umlaufende Rücksprünge aufweisen, wobei das jeweils verbleibende Stimende in einen entsprechend gestalteten Rücksprung am benachbarten Rohrkörper einzufügen ist. Dieses Rohr ist nur als Rohr für Freispiegelleitungen einsetzbar, da bei dieser Konstruktion keine Längskraftschlüssigkeit herstellbar ist.

Bekannt sind auch Rohrverbindungen für Entwässerungskanäle beim Vortrieb von Betonrohren (DE 39 41 884) mit einem einseitig befestigten Führungsring und einer äußeren Dichtung. Bei dieser Rohrverbindung spielt die äußere Dichtung eine übergeordnete Rolle und es wird keine Längskraftschlüssigkeit erzeugt.

Es sind Rohrverbindungen für Vortriebsrohre, als Gußeisenrohre, bekannt (DE 39 22 985), die durch eine Aufmantelung und ein Hülsrohr ummantelt sind, sowie durch die Lage und die Ausbildung des Druckübertragungsringes und der Dichtungen gekennzeichnet sind. Eine Längskraftschlüssigkeit ist auch mit diesem Rohr nicht herzustellen.

Die genannten Rohre und Rohrverbindungen beschäftigen sich mit der Herstellung einer dauerhaft dichten Rohrverbindung sowie mit der Herstellung außen und innen zylindrischer Rohre, die für einen Einsatz als Vortriebsrohr und die Herstellung von Freispiegelleitungen geeignet sind. Eine längskraftschlüssige Verbindung der Rohre ist jedoch nicht herstellbar.

Nach der DE 40 24 501 wird eine Rohrverbindung insbesondere für nicht bewehrte Betonvortriebsrohre, bei denen eine Manschette aus GFK im Beton verankert wird, beschrieben. Diese Verbindung ist jedoch nicht in der Lage Zugkräfte aufzunehmen. Auch müssen die Manschetten aus Stahl bestehen, um die Kraftübertragung zu sichem.

Die US-A-3 129 961 und die US-A-3 177 019 beschreiben Verbindungen für Stahlbetonverbundrohre bei der ein Stahlführungsring mit der Bewahrung verbunden ist.

Aufgabe der Erfindung ist es, eine Rohrverbindung für Stahlbeton GFK - Verbundvortriebsrohre zum Einsatz im Druckrohrbereich für die Herstellung begehbarer und nicht begehbarer Rohrleitungen anzugeben, die leicht zu montieren und dicht ist und außen und innen eine glatte Fläche aufweist.

Erfindungsgemäß wird die Aufgabe dadurch gelöst, daß das eine Ende des Stahlbeton / GFK - Verbundrohres einen im Beton verankerten Stahlführungsring aufweist, der mit mehreren innenliegenden, umlaufenden, spitzwinklig zum Stahlring ausgebildeten Krallen versehen ist, und daß das andere Ende der Verbindung ebenfalls aus einem mit der Bewehrung des Rohres verbundenen Stahlring besteht, auf dem ein umlaufender außenliegender Verzahnungsring ist. Die Krallen gleiten beim Zusammenschieben der Rohre über den Verzahnungsring und arretieren sich. Zweckmäßig ist es, die Krallen vor der an sich bekannten äußeren Dichtung anzuordnen, so daß diese beim Zusammenschieben der Rohre nicht über die Dichtung gleiten und dadurch eine Beschädigungen der Dichtung vermieden und ein Korrosionsangriff auf die Krallen ausgeschlossen wird.
Zweckmäßig ist es weiterhin, zusätzlich zum Stahlführungsring einen umlaufenden Verstärkungsring gegen Aufbeulen des Ringes unter Belastung der Krallen anzuordnen.

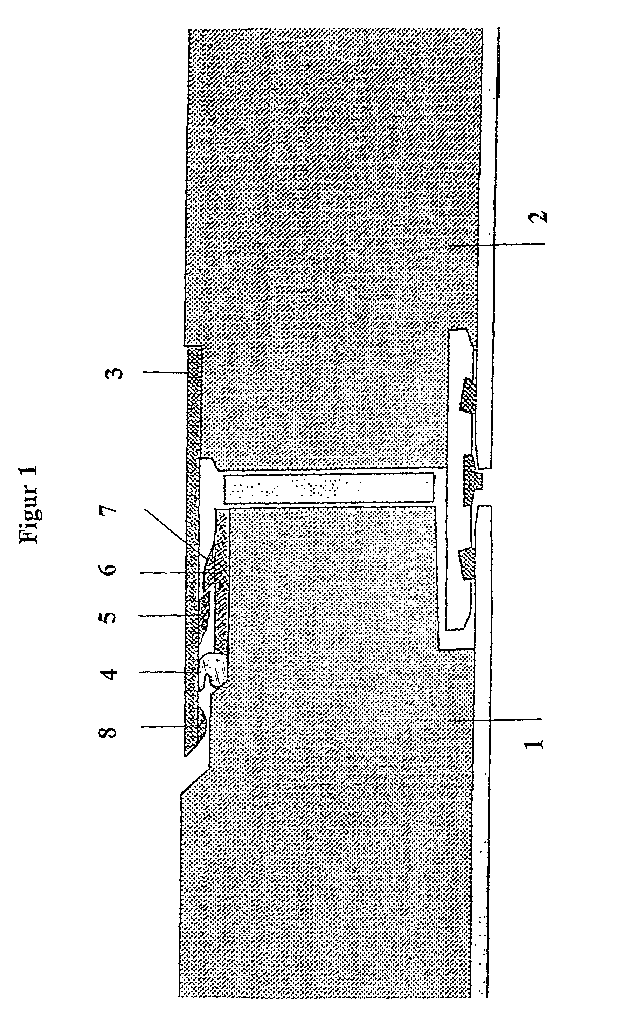

Die Erfindung soll nachstehend an einem Ausführungsbeispiel näher erläutert werden.
Die zugehörige Zeichnung (Figur 1) zeigt eine erfindungsgemäße Rohrverbindung im Schnitt.

Zwei aus Stahlbeton / GFK - Verbundmaterial bestehende Rohre 1,2 sind miteinander zu verbinden. Das Ende eines Rohres 2 ist mit einem Stahlring 3 versehen, der mit der Rohrbewehrung verbunden ist. Auf der Innenseite dieses Stahlringes 3 sind vor der Dichtung 4 Krallen 5 entsprechend den statischen Erfordernissen umlaufend angeordnet. Auf dem Ende des Rohres 1 befindet sich ein ebenfalls mit der Rohrbewehrung verbundener Stahlring 6, der mit einem umlaufenden Verzahnungsring 7 versehen ist.
Beim Zusammenschieben der Rohre 1,2 gleiten die Krallen 5, über den Verzahnungsring 7 und arretieren sich. Im Ausführungsbeispiel ist auch ein zusätzlicher umlaufender Verstärkungsring 8 vorgesehen.

## Patentansprüche

1. Längskraftschlüssige Rohrverbindung
**dadurch gekennzeichnet, daß**
das eine Ende des Stahlbeton / GFK - Verbundrohres einen im Beton verankerten Stahlführungsring (3) aufweist, der mit mehreren innenliegenden umlaufenden spitzwinklig zum Stahlring (3) ausgebildeten Krallen (5) versehen ist, und daß das andere Ende der Verbindung ebenfalls aus einem mit der Bewehrung des Rohres verbundenen Stahlring (6) besteht, auf dem ein umlaufender außenliegender Verzahnungsring (7) angeordnet ist.

2. Längskraftschlüssige Rohrverbindung nach dem Anspruch 1,
**dadurch gekennzeichnet, daß**
die Krallen vor der an sich bekannten äußeren Dichtung (4) angeordnet sind.

3. Längskraftschlüssige Rohrverbindung nach den Ansprüchen 1 und 2,
**dadurch gekennzeichnet, daß**
zusätzlich zum Stahlführungsring ein umlaufender Verstärkungsring (8) angeordnet ist.

## Claims

1. Longitudinal frictional pipe connection, **characterised in that** one end of the compound pipe of reinforced concrete and glassfibre-reinforced synthetic material has a steel guide ring (3) which is anchored in the concrete and which is provided with a plurality of internally disposed encircling claws (5) formed to be acute-angled relative to the steel ring (3) and that the other end of the connection similarly consists of a steel ring (6) which is connected with the reinforcing of the pipe and on which an encircling, outwardly disposed toothed ring (7) is arranged.

2. Longitudinal frictional pipe connection according to claim 1, **characterised in that** the claws are arranged in front of the outer seal (4), which is known per se.

3. Longitudinal frictional pipe connection according to claims 1 and 2, **characterised in that** in addition to the steel guide ring an encircling reinforcing ring (8) is arranged.

## Revendications

1. Liaison de tubes à force longitudinale,
**caractérisée en ce qu'**
une extrémité du tube d'assemblage de béton armé/GFK présente une bague de guidage en acier (3) ancrée dans le béton pourvue à l'intérieur de plusieurs griffes (5) périphériques pointues en angle, par rapport à la bague en acier (3), et l'autre extrémité est également constituée d'une bague en acier (6) raccordée à l'armature du tube, entourée à l'extérieur par une bague à denture (7).

2. Liaison de tubes à force longitudinale selon la revendication 1,
**caractérisée en ce que**
les griffes sont disposées devant le joint (4) extérieur connu en sol.

3. Liaison de tubes à force longitudinale selon les revendications 1 et 2,
**caractérisée par**
une bague de renforcement (8) périphérique en plus de la bague de guidage en acier.
